# FASCICULE DE BREVET EUROPEEN

(11) **EP 1 128 110 B1**
(45) Date de publication et mention de la délivrance du brevet: **10.05.2006**
(21) Numéro de dépôt: 01400493.1
(22) Date de dépôt: 26.02.2001
(51) Int. Cl.: F16K 31/06

(54) **Agencement d'électrovanne susceptible d'être monté sur un bloc hydraulique**
Elektromagnetventilanordnung zur Montage auf einem Hydraulikblock
Electromagnetic valve arrangement for mounting on a hydraulic block

(30) Priorité: 28.02.2000 FR 0002468
(43) Date de publication de la demande: 29.08.2001
(73) Titulaire: Peugeot Citroen Automobiles SA, 92200 Neuilly sur Seine (FR)
(72) Inventeur: Lamorlette, Bruno, 78800 Houilles (FR)
(74) Mandataire: Berger, Helmut

(56) Documents cités:
- EP-A- 0 574 735
- FR-A- 2 045 349
- FR-A- 2 784 440
- US-A- 5 785 297
- US-A- 5 944 047

## Description

L'invention concerne un agencement d'électrovanne, du type comprenant une électrovanne et des moyens de montage amovibles de celle-ci sur un support tel qu'un bloc hydraulique, ces moyens comprenant une bride susceptible d'être fixée amoviblement sur le support.

Les agencements d'électrovanne de ce type, qui sont connus des documents FR-A-2784440 ou FR-A-2045349 par exemple, présentent l'inconvénient que le montage de l'électrovanne est relativement compliqué à mettre en oeuvre et que le tube de l'électrovanne ainsi que les fils de la bobine ne sont pas suffisamment protégés contre respectivement des agressions extérieures et la corrosion.

La présente invention a pour but de proposer un agencement d'électrovanne qui pallie les inconvénients des agencements connus.

Pour atteindre ce but, un agencement d'électrovanne selon l'invention présente les caractéristiques de la Revendication 1.

Selon une caractéristique de l'invention, l'ensemble formé par la bobine et sa carcasse est surmoulé et emmanché dans la bride.

Selon une autre caractéristique de l'invention, la bride est configurée pour assurer la fermeture du champ magnétique produit par la bobine à l'état excité.

Selon une autre caractéristique de l'invention, l'ensemble surmoulé comporte, au niveau de l'extrémité supérieure du noyau de l'électrovanne, un élément de fermeture du champ magnétique, qui fait saillie au-delà de la surface latérale extérieure du matériau de surmoulage et est emmanché dans la bride.

Selon encore une autre caractéristique de l'invention, la bride est susceptible d'être vissée dans le bloc et comporte des moyens d'entraînement lors de son vissage dans ce dernier, qui sont prévus sur la face externe de la bride ou à l'intérieur de celle-ci.

Selon encore une autre caractéristique de l'invention, le connecteur électrique de l'électrovanne fait partie intégrante du surmoulage.

Selon encore une autre caractéristique de l'invention, la bride fait partie entièrement de l'électrovanne et est adaptée pour servir de moule lors du surmoulage.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en coupe diamétrale d'un agencement d'électrovanne selon l'invention ;
- la figure 2 est une vue en coupe selon la ligne II-II de la figure 3 de l'ensemble surmoulé indiqué en II sur la figure 1 ; et
- la figure 3 est une vue de dessus de la figure 2.

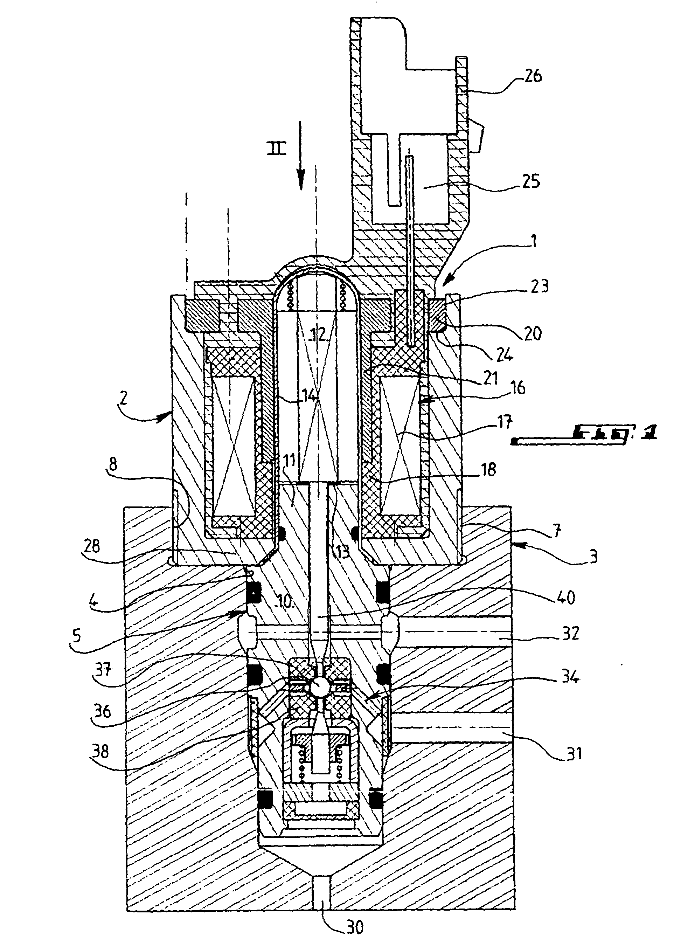

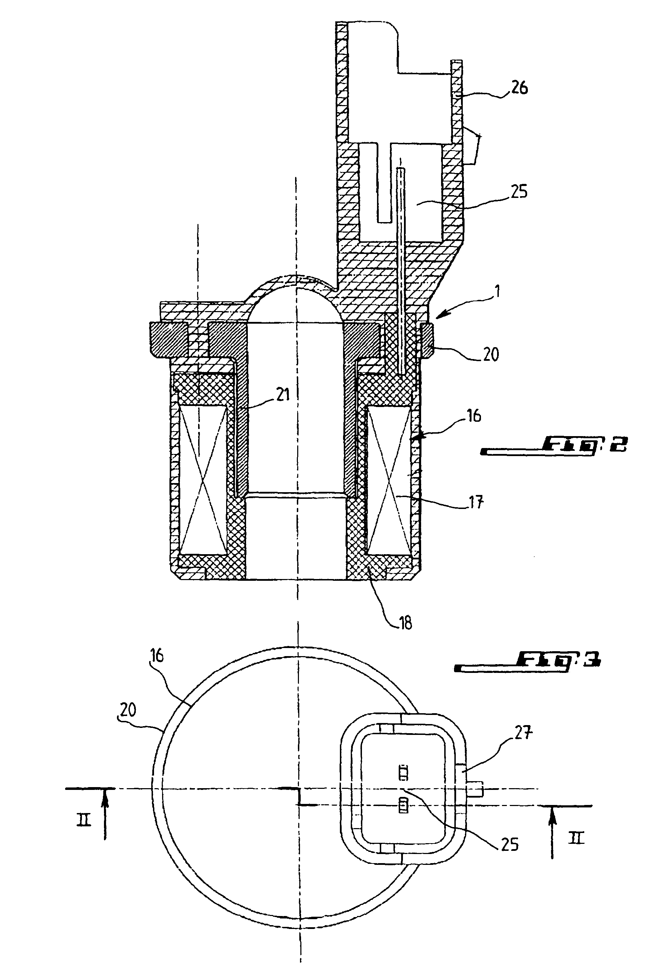

Comme il ressort de la figure 1, un agencement d'électrovanne selon l'invention comprend essentiellement une électrovanne 1 et une bride 2 réalisée sous la forme d'un corps tubulaire adapté pour constituer le logement de l'électrovanne 1 et susceptible d'être monté sur un support 3 tel qu'un bloc hydraulique pourvu d'un -évidement 4 dans lequel est logé le corps 5 de l'électrovanne. L'extrémité par laquelle la bride est fixée sur le support est pourvue sur sa face périphérique d'un filetage 7 permettant le vissage de la bride dans la partie d'entrée élargie et filetée 8 de l'évidement 4.

Le corps sus-mentionné 5 de l'électrovanne se compose de deux parties cylindriques, à savoir une partie inférieure 10 engagée dans l'évidement 4 du support 3 et une partie supérieure 11 de plus faible diamètre, un noyau 12 mobile dans l'axe de la partie supérieure 11, avec interposition d'une cale d'entrefer 13, un tube 14 en un matériau amagnétique entourant le noyau 12 et la partie de corps 11, ainsi qu'un ensemble surmoulé 16 qui est emmanché dans la bride tubulaire 2 et comporte une bobine 17, la carcasse 18 de celle-ci ainsi qu'un élément métallique 20 qui fait saillie de la face périphérique sensiblement cylindrique de l'ensemble 16 au niveau de l'extrémité supérieure du noyau 12 et sert à maintenir la bobine et à protéger les parties surmoulées contre des dégradations lors du montage, comme il sera expliqué plus loin.

L'élément 20 présente la forme d'une rondelle pourvue d'un embout tubulaire 21 et entoure coaxialement le tube 14. La partie périphérique faisant saillie hors de l'enrobage, de la rondelle 20, s'insère dans un élargissement annulaire 23 à l'extrémité libre de la bride en reposant sur l'épaulement 24 formé par cet élargissement.

La rondelle 20 et la bride 2 sont réalisées en métal et constituent des moyens de fermeture du champ magnétique que produit la bobine 17 lorsqu'elle est excitée.

La figure 1 montre que le connecteur électrique 25 de l'électrovanne fait partie intégrante du surmoulage. En effet, la matière de surmoulage forme sur la face supérieure de l'électrovanne une excroissance creuse de forme sensiblement rectangulaire 26 à l'intérieur de -laquelle s'étend le connecteur 25.

Il est encore à noter que la bride est pourvue de moyens d'entraînement pour son vissage dans le support 3. Ces moyens d'entraînement peuvent être prévus sur la face extérieure de la bride et réalisés par une configuration par exemple hexagonale de pans. Les moyens d'entraînement peuvent également être prévus à l'intérieur de la bride. Les contraintes mécaniques produites lors du vissage de la bride dans le bloc 3 sont absorbées par la rondelle, ce qui protège les parties surmoulées.

Pour compléter la description de l'agencement d'électrovanne, on constate que l'extrémité inférieure de la bride 2 est partiellement fermée en 28 et ne comporte qu'un perçage circulaire central pour le passage de la partie 11 de l'électrovanne. L'ensemble surmoulé repose sur la paroi inférieure annulaire 28 de la bride.

La figure 1 montre, à titre d'exemple, une électrovanne configurée pour pouvoir fonctionner comme électrovanne à trois voies, et comportant une voie 30 d'arrivée d'un fluide hydraulique haute pression, une voie 31 de connexion à un circuit utilisateur et une voie 32 de retour vers le réservoir, toutes pratiquées dans le support 3, ainsi qu'un dispositif 34 de mise en communication, d'une part, de la voie haute pression 30 avec la voie d'utilisation 31 et, d'autre part, de cette voie 31 avec la voie de retour 32 vers le réservoir. Ce dispositif 34 comporte à cette fin une bille 36 à laquelle sont associés deux sièges d'étanchéité 37 et 38. La bille est déplacée par l'intermédiaire d'une tige 40, par le noyau 12 de l'électrovanne entre les deux sièges.

Etant donné que l'invention ne concerne pas la structure proprement dite de la partie à trois voies, cette partie ne sera pas décrite plus en détail.

Comme il ressort de la description qui vient d'être faite, l'invention procure un grand nombre d'avantages majeurs. Etant donné que la bobine est surmoulée avec la -rondelle de fermeture, le montage est facile puisqu'il se limite à emmancher l'ensemble surmoulé dans la bride. La rondelle surmoulée sert à reboucler le champ magnétique et à maintenir la bobine en n'exerçant lors du serrage aucune pression sur la partie plastique. Donc il n'y a aucun risque de dégradation lors du montage. La bobine devient solidaire de la bride. La bobine étant montée par emmanchement sur la bride qui sert également de capot, on obtient, en plus de la simplification du montage, les avantages d'une étanchéité complète vis-à-vis du fil de la bobine en évitant la corrosion, et d'une protection du tube de l'électrovanne contre les agressions extérieures, notamment grâce au surmoulage de la partie haute. L'invention rend possible d'orienter le connecteur, qui fait partie intégrante du surmoulage, au moment de l'emmanchement. Le fait que la bride est filetée permet de retenir la cartouche hydraulique lors du vissage dans le corps, à l'aide du moyen d'entraînement prévu à l'extérieur ou à l'intérieur de la bride. En plus, la bride referme le champ magnétique et isole la bobine.

Dans le mode de réalisation de l'invention, qui vient d'être décrit, la bride est réalisée sous forme d'une pièce séparée. Mais on pourrait également envisager de faire en sorte que la bride fasse partie entièrement de la bobine et pourrait alors servir de moule lors du surmoulage de la bobine et du connecteur.

## Revendications

1. Agencement d'électrovanne, du type comprenant une électrovanne et des moyens de montage amovible de celle-ci sur un support, tel qu'un bloc hydraulique, ces moyens comprenant une bride susceptible d'être fixée amoviblement sur le support, **caractérisé en ce que** la bride (2) est réalisée sous forme d'un corps creux dans lequel l'électrovanne (1) vient se loger entièrement.

2. Agencement selon la revendication 1, **caractérisé en ce que** l'ensemble (16) formé par la bobine (17) et sa carcasse (18) est surmoulé et emmanché dans la bride (2).

3. Agencement selon la revendication 2, **caractérisé en ce qu'**il comprend des moyens pour assurer la fermeture du champ magnétique produit par la bobine (17) à l'état excité.

4. Agencement selon l'une des revendications 2 ou 3, **caractérisé en ce que** l'ensemble surmoulé (16) comporte, au niveau de l'extrémité supérieure du noyau (12) de l'électrovanne, un élément de fermeture du champ magnétique (20) qui fait saillie au-delà de la surface latérale extérieure du matériau de surmoulage et est emmanché dans la bride (2).

5. Agencement selon l'une des revendications 1 à 4, **caractérisé en ce que** la bride (2) est susceptible d'être vissée dans le bloc hydraulique (3) et comporte des moyens d'entraînement lors de son vissage dans ce dernier.

6. Agencement selon la revendication 5, **caractérisé en ce que** les moyens d'entraînement de la bride (2) sont prévus à l'extérieur de cette dernière au niveau de l'élément .(20) précité.

7. Agencement selon la revendication 6, **caractérisé en ce que** les moyens d'entraînement sont prévus à l'intérieur de la bride (2).

8. Agencement selon l'une des revendications 6 ou 7, **caractérisé en ce que** l'élément précité (20) est adapté pour absorber les contraintes mécaniques (8) lors du vissage de la bride dans le bloc hydraulique (3).

9. Agencement selon l'une des revendications 2 à 8, **caractérisé en ce que** le connecteur électrique (25) de l'électrovanne (1) fait partie intégrante du surmoulage.

10. Agencement selon l'une des revendications précédentes, **caractérisé en ce que** la bride (2) est adaptée pour servir de moule lors du surmoulage.

## Patentansprüche

1. Magnetventilanordnung, umfassend ein Magnetventil und Mittel zu dessen lösbarer Montage auf einem Träger, wie einem Hydraulikblock, wobei diese Mittel eine Muffe umfassen, die auf dem Halter lösbar befestigt werden kann, **dadurch gekennzeichnet, dass** die Muffe (2) in Form eines hohlen Körpers ausgebildet ist, in dem das Magnetventil (1) ganz untergebracht ist.

2. Anordnung nach Anspruch 1, **dadurch gekennzeichnet, dass** die von der Spule (17) und ihrem Spulenkörper (18) gebildete Einheit (16) vergossen und in die Muffe (2) eingepresst ist.

3. Anordnung nach Anspruch 2, **dadurch gekennzeichnet, dass** sie Mittel zum Schließen des von der Spule (17) in erregtem Zustand erzeugten Magnetfelds umfasst.

4. Anordnung nach einem der Ansprüche 2 oder 3, **dadurch gekennzeichnet, dass** die vergossene Einheit (16) auf Höhe des oberen Endes des Kerns (12) des Magnetventils ein Element (20) zum Schließen des Magnetfelds aufweist, das bezüglich der seitlichen Außenfläche des Vergussmaterials vorsteht und in die Muffe (2) eingepresst ist.

5. Anordnung nach einem der Ansprüche 1 bis 4, **dadurch gekennzeichnet, dass** die Muffe (2) in den Hydraulikblock (3) eingeschraubt werden kann und Antriebsmittel für ihre Einschraubung in diesen aufweist.

6. Anordnung nach Anspruch 5, **dadurch gekennzeichnet, dass** die Antriebsmittel der Muffe (2) außen an dieser auf Höhe des Elements (20) vorgesehen sind.

7. Anordnung nach Anspruch 6, **dadurch gekennzeichnet, dass** die Antriebsmittel im Inneren der Muffe (2) vorgesehen sind.

8. Anordnung nach einem der Ansprüche 6 oder 7, **dadurch gekennzeichnet, dass** das Element (20) dafür ausgelegt ist, die mechanischen Belastungen (8) bei der Einschraubung der Muffe in den Hydraulikblock (3) zu absorbieren.

9. Anordnung nach einem der Ansprüche 2 bis 8, **dadurch gekennzeichnet, dass** der elektrische Verbinder (25) des Magnetventils (1) einen integrierenden Bestandteil des Vergusses bildet.

10. Anordnung nach einem der vorhergehenden Ansprüche, **dadurch gekennzeichnet, dass** die Muffe (2) dafür ausgelegt ist, bei dem Vergießen als Form zu dienen.

## Claims

1. Solenoid valve arrangement, of the type including a solenoid valve and means for removably mounting same on a support, such as a hydraulic block, these means including a collar capable of being removably fixed to the support, **characterised in that** the collar (2) is made in the form of a hollow body within which the solenoid valve (1) is completely accommodated.

2. Arrangement according to claim 1, **characterised in that** the assembly (16) formed by the coil (17) and the coil body is overmoulded and fitted into the collar (2).

3. Arrangement according to claim 2, **characterised in that** it includes means for closing the magnetic field produced by the coil (17) when in a state of excitation.

4. Arrangement according to either of claims 2 or 3, **characterised in that** the overmoulded assembly (16) includes, at the upper extremity of the core (12) of the solenoid valve, an element for closing the magnetic field (20) which projects beyond the exterior lateral surface of the overmoulding material and is fitted to the collar (2).

5. Arrangement according to any of claims 1 to 4, **characterised in that** the collar (2) is capable of being screwed into the hydraulic block (3) and includes drive engagement means for use when it is screwed into the latter.

6. Arrangement according to claim 5, **characterised in that** the drive engagement means belonging to the collar (2) is provided on the exterior of the latter at the level of the element (20) mentioned above.

7. Arrangement according to claim 6, **characterised in that** the drive engagement means is provided on the interior of the collar (2).

8. Arrangement according to one of claims 6 or 7, **characterised in that** the element (20) mentioned above is adapted to absorb the stresses (8) when the collar is screwed into the hydraulic block (3).

9. Arrangement according to any one of claims 2 to 8, **characterised in that** the electrical connector (25) of the solenoid valve (1) forms an integral part of the overmoulding.

10. Arrangement according to any one of the preceding claims, **characterised in that** the collar (2) is adapted to be used as a mould during overmoulding.
